# EUROPEAN PATENT APPLICATION

(11) **EP 3 321 867 A1**
(43) Date of publication of application: **16.05.2018**
(21) Application number: 17180139.2
(22) Date of filing: 06.07.2017
(51) Int. Cl.: G06Q 10/06

(54) **A METHOD FOR MAINTAINING AIRCRAFT AND A CONFIGURATION SYSTEM AND A COMPUTING DEVICE THEREOF**

(30) Priority: 09.11.2016 CN 201610982425
(71) Applicant: Air China Limited, Beijing 101312 (CN)
(72) Inventor: YANG, Guibin, Beijing, 101312 (CN); LI, Tang, Beijing, 101312 (CN); LI, Yuanbin, Beijing, 101312 (CN); BI, Wenjing, Beijing, 101312 (CN)
(74) Representative: Bittner, Bernhard

(57) **Abstract**

The present application relates to a maintenance method for aircraft and a configuration system and a computing device thereof. The maintenance method comprises: accessing the maintenance task database to obtain the location and timing of the current aircraft maintenance task; accessing the maintenance person database to obtain a list of available maintenance person and classify the available maintenance person as the first collection of candidates; determining whether each candidate in the first collection of candidates meets the requirements for the location and timing of the current aircraft maintenance task, and then classifying the candidates meeting such requirements in the first collection of candidates as the second collection of candidates; selecting the first maintenance person from the second collection of candidates to perform the current aircraft maintenance task, and determining the estimated start time tᵢ and the estimated end time tₑ of the current aircraft maintenance task based on the information of the first maintenance person. With the embodiments of the present application, it is proved that the maintenance person can be more accurately time-division multiplexed, thereby improving the resource utilization rate.

## Description

### TECHNICAL FIELD

The present invention relates to a method for maintaining an aircraft and a configuration system and a computing device thereof.

### BACKGROUND

Aircraft maintenance represents an important part in the operations of airlines. Given the numerous tasks for aircraft maintenance each day and the limited human resources they have, how to assign the maintenance persons properly to handle these tasks has become a top concern for all airlines.

At present, maintenance persons are assigned the aircraft maintenance tasks mainly by management staff in the airlines, which makes the resources unable to be utilized maximally due to arbitrariness involved in this process.

### SUMMARY

In response to one or more technical problems above, a system and method is required to optimize the scheduling for aircraft maintenance in the aviation field.

The embodiments of the present application provide a method for maintaining an aircraft and a configuration system and a computing system thereof to solve one or more problems above.

According to one aspect on the present application, it provides a maintenance method, comprising:
Accessing a maintenance task database through a computing device to obtain location and timing of current aircraft maintenance task;
Accessing a maintenance personnel database through said computing device to obtain a list of available maintenance persons and classify said available maintenance persons as a first collection of candidates;
Determining whether each candidate in said first collection of candidates meets the requirements for said location and timing of said current aircraft maintenance task through said computing device, and then classifying the candidates meeting such requirements in said first collection of candidates as a second collection of candidates; and
Selecting a first maintenance person from said second collection of candidates through said computing device to perform said current aircraft maintenance task, and determining the estimated start time tᵢ and the estimated end time tₑ of said current aircraft maintenance task based on information of the said first maintenance person.

According to one embodiment, the method for maintaining an aircraft further comprises: selecting other maintenance persons from the second collection of candidates through the computing device to perform the current aircraft maintenance task together with the first maintenance person, wherein each of said other maintenance persons meets the requirements of the estimated start time and the estimated end time of the current aircraft maintenance task.

According to another embodiment, wherein the conditions determining whether each candidate in said first collection of candidates meets the requirements for such location and timing include,
for each candidate in the first collection of candidates, if the candidate satisfies T≥T_{S}+2ΔT; in case that is is satisfied, it is determined that the maintenance person candidate meet the requirements of said location and timing, wherein T is an amount of time corresponding to the time period overlapped by the idling time period of the maintenance person with the task time period of the current aircraft maintenance task; Ts is an estimated amount of time required by the current aircraft maintenance task; ΔT is an estimated redundancy; and the task time period of said current aircraft maintenance task can be the time period for performing the current aircraft maintenance task.

According to another embodiment, wherein the conditions to determine whether each candidate in said first collection of candidates meets the requirements for such location and timing include,
for each candidate in the first collection of candidates, if the candidate satisfies T≥T_{S}+ (ΔL₁+ ΔL₂) /V_{S}, in case that the it is satisfied, it is determined that the candidate meet the requirements of said location and timing, wherein T is a amount of time corresponding to the time period overlapped by the idling time period of the maintenance person with the task time period of the current aircraft maintenance task; Ts is an estimated amount of time required by the current aircraft maintenance task; ΔT is an estimated redundancy ; the task time period of said current aircraft maintenance task can be the time period for performing the current aircraft maintenance task, ΔL₁ is the distance between the location of said current aircraft maintenance task and the location of the aircraft maintenance task assigned to the candidate prior to said current aircraft maintenance task, ΔL₂ is the distance between the location of said current aircraft maintenance task and the location of the aircraft maintenance task assigned for the candidate following said current aircraft maintenance task, and V_{S} is a set speed.

According to one embodiment, the method for maintaining an aircraft further comprises:
ranking the candidates in the second collection of candidates in order of time priority based on the comparison result of the time quantities T_{A} and T_{S} of each candidate's corresponding idling time period, wherein a smaller difference between T_{A} and T_{S} means a higher time priority.

According to one embodiment, the method for maintaining an aircraft further comprises:
ranking the candidates in the second collection of candidates in order of distance priority based on the combined distances of the location of current aircraft maintenance task, the location of the aircraft maintenance task prior to the current aircraft maintenance task, and the location of the aircraft maintenance task following the current aircraft maintenance task, wherein a shorter combined distance means a higher priority.

According to one embodiment, the method for maintaining an aircraft further comprises: selecting the candidates with the highest or higher time priority from the second collection of candidates as the first maintenance person.

According to one embodiment, the method for maintaining an aircraft further comprises: selecting the candidates with the highest or higher distance priority from the second collection of candidates as the first maintenance person.

According to one embodiment, the method for maintaining an aircraft further comprises:
ranking the candidates in the second collection of candidates in order of distance priority based on the combined distances of the location of current aircraft maintenance task, the location of the aircraft maintenance task prior to the current aircraft maintenance task, and the location of the aircraft maintenance task following the current aircraft maintenance task, wherein a shorter combined distance means a higher priority; for each candidate in said second collection of candidates, calculating the weighted sum of said time priority and said distance priority using predetermined weights as a comprehensive priority; and selecting the candidate with the highest or higher comprehensive priority from the second collection of candidates as the first maintenance person.

According to one embodiment, wherein the set weighting value for said time priority is greater than the set weighting value for said distance priority while calculating said weighted sum.

According to one embodiment, wherein the selection of said other maintenance persons from said second collection of candidates further comprises,
for each candidate in said second collection of candidates other than the first maintenance person, determining whether the start time tᵢ' and the end time tₑ' of the corresponding idling time period of the candidate satisfy said estimated start time tᵢ and said estimated end time tₑ; classifying the candidates satisfying said estimated start time and said estimated end time in the second collection of candidates, other than the first maintenance person, as a third collection of candidates; and selecting said other maintenance persons from said third collection of candidates.

According to one embodiment, wherein the conditions to determine whether the start time tᵢ' and the end time tₑ' of the corresponding idling time period of the candidate meet said estimated start time tᵢ and said estimated end time tₑ include,
determining whether tᵢ' is greater than or equal to the amount of time of ΔT earlier than tᵢ and tₑ' is greater than or equal to the amount of time of ΔT later than tₑ, and, if the answer is YES, it is determined that the candidate satisfies said estimated start time tᵢ and said estimated end time tₑ.

According to one embodiment, wherein the conditions to determine whether the start time tᵢ' and the end time tₑ' of the corresponding idling time period of the candidate satisfy said estimated start time tᵢ and said estimated end time tₑ include,
determining whether tᵢ' is greater than or equal to the amount of time of ΔL₁/V_{S} earlier than tᵢ and tₑ' is greater than or equal to the amount of time of ΔL₂/V_{S} later than tₑ, wherein ΔL₁ is the distance between the location of said current aircraft maintenance task and the location of the aircraft maintenance task assigned for the candidate prior to said current aircraft maintenance task, ΔL₂ is the distance between the location of said current aircraft maintenance task and the location of the aircraft maintenance task assigned for the candidate following said current aircraft maintenance task, and V_{S} is a set speed, and, if the answer is YES, it is determined that the candidate satisfy said estimated start time tᵢ and said estimated end time tₑ.

According to one embodiment, wherein the selection of said other maintenance persons from said third collection of candidates comprises
ranking the candidates in the third collection of candidates in order of time priority based on the comparison result of the amount of time T_{A} of each candidate's corresponding idling time period and the estimated amount of time T_{S} of said current aircraft maintenance task, wherein a smaller difference between T_{A} and T_{S} means a higher time priority, and
selecting the candidates with higher time priority from the third collection of candidates as said other maintenance persons.

According to one embodiment, wherein the determination of the estimated start time and the estimated end time of the current aircraft maintenance task based on the information of the first maintenance person comprises:
comparing the start time of said first maintenance person's corresponding idling time period in the information of said first maintenance person plus the value of ΔL₁/V_{S} and the start time of the task time period of said current aircraft maintenance task, and taking a later one from the results as the evaluated start time tᵢ of said current aircraft maintenance task, and using the time point obtained by calculating tᵢ+T_{S} as the evaluated end time tₑ of the current aircraft maintenance task.

According to one embodiment, the method for maintaining an aircraft further comprises: accessing said maintenance task database through said computing device to obtain a maintenance level of said current aircraft maintenance task, and removing the maintenance person who does not conform with said maintenance level from said first collection of candidates.

According to one embodiment, wherein said other maintenance persons are selected from said second collection of candidates based on predetermined constraint conditions including one or more conditions such as fairness, exception, matching habits, and/or successful patterns.

According to one embodiment, wherein said one or more conditions of fairness, exception, matching habits, and/or successful patterns are preset or obtained from big data analysis.

According to one embodiment, wherein the time for said current aircraft maintenance task comprises a task time period of said current aircraft maintenance task and the estimated amount of time of said current aircraft maintenance task.

According to one embodiment, the method for maintaining an aircraft further comprises: determining whether the selected maintenance persons for said current aircraft maintenance task include a maintenance person qualified to release aircraft; in response to the determination that a maintenance person qualified to release aircraft is not included, obtaining the information of the maintenance persons qualified to release aircraft from said database and classifying such maintenance persons as candidate aircraft release persons, and from said candidate release persons, selecting aircraft those who meet said location and timing of said current aircraft maintenance task from said candidates for aircraft release to perform said current aircraft maintenance task.

According to one embodiment, the method for maintaining an aircraft further comprises: receiving a change request of aircraft maintenance task and rearranging the affected aircraft maintenance task.

According to one embodiment, the method for maintaining an aircraft further comprises: the change request of said aircraft maintenance task comprising one or more following changes: addition or subtraction of aircraft maintenance task, maintenance level of aircraft maintenance task, location of aircraft maintenance task, timing of aircraft maintenance task, and maintenance persons.

According to one embodiment, the method for maintaining an aircraft further comprises: following the selection of said first maintenance person for said current aircraft maintenance task, updating said maintenance task database based on the estimated start time and estimated end time of said current aircraft maintenance task.

According to one embodiment, the method for maintaining an aircraft further comprises: following the selection of said first maintenance person and said other maintenance persons for said current aircraft maintenance task, updating said maintenance personnel database based on the estimated start time and estimated end time of said current aircraft maintenance task.

According to one embodiment, the method for maintaining an aircraft further comprises: receiving fault message sent by aircraft on a real-time basis through ACARS system, analyzing the fault message and reading aircraft fault information, and adding records for aircraft maintenance task to said maintenance task database according to said aircraft fault information.

According to one embodiment, the method for maintaining an aircraft further comprises: sending maintenance instruction to the terminal device accessible to the selected said first maintenance person and/or said other maintenance persons.

According to one embodiment, sending maintenance instruction to the terminal device accessible to the selected said first maintenance person and/or said other maintenance persons comprises: issuing a notice of maintenance task to the terminal device accessible to the selected said first maintenance person and/or said other maintenance persons and requesting a confirmation from said first maintenance person and/or said other maintenance persons.

According to one embodiment, the method for maintaining an aircraft further comprises: giving a warning through said computing device if said confirmation is not received within predetermined time period.

According to another aspect of the present invention, a computing device is provided to implement the method for maintaining an aircraft, comprising:
a memory;
a processor that can access said memory, wherein said memory stores instructions that make said computing device configured to perform said method for maintaining an aircraft above in the course of implementation.

According to another aspect of the present invention, a configuration system for aircraft maintenance is provided, comprising:
a database system comprising a maintenance task database and a maintenance personnel database;
a data input interface unit connected with said maintenance task database for receiving records of aircraft maintenance task and updating said maintenance task database, and said records comprising the level, location and timing of said aircraft maintenance task;
a decision-making unit able to access said maintenance task database and said maintenance personnel database and configured to
obtain the location and timing for current aircraft maintenance task by accessing the maintenance task database of said database system;
obtain a list of available maintenance persons and classify the available maintenance persons as the first collection of candidates by accessing the maintenance personnel database of said database system;
determine whether each candidate in the first collection of candidates meets the requirements for the location and timing of the current aircraft maintenance task, then classify the candidates meeting such requirements in the first collection of candidates as the second collection of candidates;
select the first maintenance person from said second collection of candidates to perform said current aircraft maintenance task, and determine the evaluated start time tᵢ and the evaluated end time tₑ of said current aircraft maintenance task based on the information of said first maintenance person, and
select one or more maintenance persons different from the first maintenance person as other maintenance persons from the ones meeting the evaluated start time and the evaluated end time of said current aircraft maintenance task in the second collection of candidates to perform said current aircraft maintenance task together with said first maintenance person, and
a display unit coupled with said decision-making unit to display the configuration result of the decision-making unit.

According to one embodiment, the configuration system for aircraft maintenance further comprises: a trigger, wherein said trigger triggers said decision-making unit to reconfigure the affected maintenance task when said data input interface receives a request to change maintenance task.

According to one embodiment, wherein said change request of maintenance task comprises one or more following changes: maintenance level of maintenance task, location of maintenance task, and timing of maintenance task.

According to one embodiment, wherein the conditions to determine whether each candidate in said first collection of candidates meets the requirements for said location and timing of said current aircraft maintenance task include, for each candidate in the first collection of candidates, if the candidate satisfying T≥T_{S}+2ΔT; in case that it is satisfied, it is determined that the candidate meet the requirements of said location and timing, wherein T is a amount of time corresponding to the time period overlapped by the idling time period of the maintenance person with the task time period of the current aircraft maintenance task; Ts is an estimated amount of time required by the current aircraft maintenance task; ΔT is an estimated redundancy ; and the task time period of said current aircraft maintenance task can be the time period for performing the current aircraft maintenance task.

According to one embodiment, wherein the conditions to determine whether each candidate in said first collection of candidates meets the requirements for said location and timing of said current aircraft maintenance task include, for each candidate in the first collection of candidates, if the candidate meeting T≥T_{S}+ (ΔL₁+ΔL₂) /Vs, and in case that the candidate meets the requirement, the candidate is identified as a competent maintenance candidate for said location and timing, wherein T is a amount of time corresponding to the time period overlapped by the idling time period of the maintenance person with the task time period of the current aircraft maintenance task; Ts is an estimated amount of time required by the current aircraft maintenance task; ΔT is estimated redundancy; the task time period of said current aircraft maintenance task can be the time period for performing the current aircraft maintenance task, ΔL₁ is the distance between the location of said current aircraft maintenance task and the location of the aircraft maintenance task assigned for the candidate prior to said current aircraft maintenance task, ΔL₂ is the distance between the location of said current aircraft maintenance task and the location of the aircraft maintenance task assigned for the candidate following said current aircraft maintenance task, and V_{S} is a set speed.

According to one embodiment, wherein said decision-making unit is further configured to rank the candidates in the second collection of candidates in order of time priority based on the comparison result of the time amounts T_{A} and T_{S} of each candidate's corresponding idling time period, wherein a smaller difference between T_{A} and T_{S} means a higher time priority.

According to one embodiment, wherein said decision-making unit is further configured to rank the candidates in the second collection of candidates in order of distance priority based on the combined distances of the location of current aircraft maintenance task, the location of the aircraft maintenance task prior to the current aircraft maintenance task, and the location of the aircraft maintenance task following the current aircraft maintenance task, wherein a shorter combined distance means a higher priority.

According to one embodiment, wherein said decision-making unit is further configured to select the candidate with the highest or higher time priority from the second collection of candidates as said first maintenance person.

According to one embodiment, wherein said decision-making unit is further configured to select the candidate with the highest or higher distance priority from the second collection of candidates as said first maintenance person.

According to one embodiment, wherein said decision-making unit is further configured to rank the candidates in the second collection of candidates in order of distance priority based on the combined distances of the location of current aircraft maintenance task, the location of the aircraft maintenance task prior to the current aircraft maintenance task, and the location of the aircraft maintenance task following the current aircraft maintenance task, wherein a shorter combined distance means a higher priority; for each candidate in said second collection of candidates, calculating the weighted sum of said time priority and said distance priority using predetermined weights, as a comprehensive priority; and selecting the candidate with the highest or higher comprehensive priority from the second collection of candidates as the first maintenance person.

According to one embodiment, wherein the set weighting value for said time priority is greater than the set weighting value for said distance priority while calculating said weighted sum.

According to one embodiment, wherein the selection of said other maintenance persons from said second collection of candidates further comprises, for each candidate in said second collection of candidates other than the first maintenance person, determining whether the start time tᵢ' and the end time tₑ' of the corresponding idling time period of the candidate satisfy said estimated start time tᵢ and said estimated end time tₑ; classifying the candidates satisfying said estimated start time and said estimated end time in the second collection of candidates, other than the first maintenance person, as a third collection of candidates; and selecting said other maintenance persons from said third collection of candidates.

According to one embodiment, wherein the conditions to determine whether the start time tᵢ' and the end time tₑ' of the corresponding idling time period of the candidate satisfy said estimated start time tᵢ and said estimated end time tₑ include, determining whether tᵢ' is greater than or equal to the amount of time of ΔT earlier than tᵢ and tₑ' is greater than or equal to the amount of time of ΔT later than tₑ, and, if the answer is YES, it is determined that the candidate satisfy said estimated start time tᵢ and said estimated end time tₑ.

According to one embodiment, wherein the conditions to determine whether the start time tᵢ' and the end time tₑ' of the corresponding idling time period of the candidate meet said evaluated start time tᵢ and said evaluated end time tₑ include, determining whether tᵢ' is greater than or equal to the amount of time of ΔL₁/V_{S} earlier than tᵢ and tₑ' is greater than or equal to the amount of time of ΔL₂/V_{S} later than tₑ, wherein ΔL₁ is the distance between the location of said current aircraft maintenance task and the location of the aircraft maintenance task assigned for the candidate prior to said current aircraft maintenance task, ΔL₂ is the distance between the location of said current aircraft maintenance task and the location of the aircraft maintenance task assigned for the candidate following said current aircraft maintenance task, and V_{S} is a set speed, and, if the answer is YES, it is determined that the candidate satisfy said estimated start time tᵢ and said estimated end time tₑ.

According to one embodiment, wherein the selection of said other maintenance persons from said third collection of candidates comprises: ranking the candidates in the third collection of candidates in order of time priority based on the comparison result of the amount of time T_{A} of each candidate's corresponding idling time period and the estimated amount of time Ts of said current aircraft maintenance task, wherein a smaller difference between T_{A} and T_{S} means a higher time priority, and selecting the candidates with higher time priority from the third collection of candidates as said other maintenance persons.

According to one embodiment, wherein the selection of said other maintenance persons from said third collection of candidates comprises: ranking the time priority of the candidates in the third collection of candidates based on the comparison result of the amount of time T_{A} of each candidate's corresponding idling time period and the estimated amount of time T_{S} of said current aircraft maintenance task, wherein a smaller difference between T_{A} and T_{S} means a higher time priority, and ranking the candidates in the third collection of candidates in order of distance priority based on the combined distances of the location of current aircraft maintenance task, the location of the aircraft maintenance task prior to the current aircraft maintenance task, and the location of the aircraft maintenance task following the current aircraft maintenance task, wherein a shorter combined distance means a higher priority; for each candidate in said third collection of candidates, calculating the weighted sum of said time priority and said distance priority using predetermined weights as a comprehensive priority; and selecting the candidates with higher comprehensive priority from the third collection of candidates as other maintenance persons.

On the basis of the embodiments discussed above and the embodiments described in the Figures below in the present application, maintenance persons can be automatically assigned for aircraft maintenance tasks as a way to avoid possible impractical resource distribution by management staff while improving efficiency. The determination about whether the candidates meet the requirements for timing and location of the current aircraft maintenance task based on the task information leads to a more accurate candidate identification and a more efficient assignment of maintenance persons. The determining of the first most suitable maintenance person followed by determining the equivalent other maintenance persons allows a more flexible assignment of maintenance persons, maximally optimizing resource distribution. In addition, the priority rank of maintenance persons, on the basis of the comparison between the idling time period of the maintenance persons to be used for the current aircraft maintenance task with the estimated time period required by the aircraft maintenance task, enables a better time division multiplexing for maintenance persons and higher resource utilization rate, bringing about a reasonable human resource distribution. Further, maintenance persons can spend less time on their way for maintenance according to the priority ranking of candidates based on the distance between the location of the current aircraft maintenance task to be assigned and the locations of the previous aircraft maintenance task and the next aircraft maintenance task, achieving a maximum usage of resource.

### BRIEF DESCRIPTION OF THE DRAWINGS

Unless otherwise indicated, the same reference sign present in many figures in the drawings represents the same or similar component or element. The drawings generally illustrate each embodiment involved in the present application rather than limitation. Such drawings are not necessarily provided in proportion.
Fig. 1 is a schematic diagram showing a hardware environment to achieve the method for maintaining an aircraft according to embodiments in the present application.
Fig. 2 is a flow diagram showing a method for maintaining an aircraft according to one embodiment in the present application.
Fig. 3 is a flow chart showing a process for determining whether maintenance persons meet the requirements for location and timing according to one embodiment in the present application.
Fig. 4 is a schematic diagram showing the composition of a configuration system for aircraft maintenance according to one embodiment in the present application.
Fig. 5 shows a computing device communicably connected to a data system of aircraft according to one embodiment in the present application.

### DETAILED DESCRIPTION OF THE INVENTION

The following contents simply describe some typical embodiments. As known by those people skilled in the art, said embodiments may be amended in different approaches so long as they adhere to the principles or fall into the protection scope of the present invention. Therefore, the Figures and descriptions are essentially regarded as embodiments rather than limitation.

Before a detailed description about typical embodiments, it should be noted that some typical embodiments are illustrated as flow charts. Although the flow charts describe each operation in sequence, many operations may be implemented concurrently or simultaneously. In addition, the sequence of the operations could be re-arranged. Said illustration may be ended when the operations complete, but it may include additional steps not present in the Figures. Such an illustration may correspond to a method, a function, a regulation, a subroutine, a subprogram, etc.

The methods discussed below (some are illustrated by flow chart) can be implemented by hardware, software, firmware, middleware, microcode, hardware description language or any combination thereof. When software, firmware, middleware or microcode is employed, the program coding or code segment used to perform the necessary tasks can be stored in a machine or in a computer-readable medium (such as storage medium). One or more processors are able to perform necessary tasks.

Prior to the present application, the management staff generally assign the maintenance persons according to flight segments of the aircraft. For instance, if an aircraft is expected to land at airport at 9 o'clock and take off at 11 o'clock, one or more maintenance persons will be assigned to maintain the aircraft and no other work will be arranged for the one or more maintenance persons during this period, no matter whether they can complete the task in advance or not.

In the embodiments of the present application, the assignment of maintenance persons is refined, making possible a better time division multiplexing for maintenance persons and higher level of aircraft maintenance.

According to one embodiment, the method for maintaining an aircraft based on the embodiments in the present application can be implemented by a computer/computing device, specifically, by running the software procedure in the computer/computing device, the hardware/firmware that form the computer/computing device, and/or the combination thereof. The computer/computing device comprises a local storage device and/or a storage device remotely accessible by networking. The computer/computing device may become a part of a computer system that comprises a memory device able to be communicably connected to the computing device through network. The computing device may access the database in the storage device to perform the method for aircraft maintenance in the present application.

The database in the storage device include a maintenance task database and a maintenance personnel database. For example, the maintenance task database may store the data and information linked to each aircraft maintenance task, such as the level, timing and location of each aircraft maintenance task. In one embodiment, the task location can be the parking spot at an airport for the aircraft, such as the number of a gate, and relative/absolute location information. The timing information for the task may comprise task time period information for the performance of the aircraft maintenance task (in another embodiment, the task time period is the evaluated task time period of the aircraft maintenance task), the estimated start time and the estimated end time of the task, the estimated amount of time Ts required by the task, and the redundant amount of time ΔT for aircraft maintenance task. For example, when the aircraft to be maintained will land at a parking spot a at 11:00 a.m. and take off at 13:00 p.m., the task time period for aircraft maintenance is from 11:00 a.m. to 13:00. p.m. and the task location is parking spot a. The evaluated amount of time Ts required by the task is the evaluated amount of time necessary to complete the aircraft maintenance task. For example, a computing device provides the estimated amount of time required by the task based on the specific work of the aircraft maintenance task and the statistical average amount of time according to the historical data of each work or other approaches and then records it in the maintenance task database. The redundant amount of time ΔT for aircraft maintenance task can be a constant, which may comprise the travel time spent by the maintenance person from the location of the prior task or flight control center to the task location. In one embodiment, ΔT is set based on empirical data or statistical data in order to ensure the maintenance person has sufficient time to arrive at the possible far most task location from any potential task location in the airport within ΔT amount of time. In another embodiment, ΔT may vary according to aircraft maintenance tasks (e.g. changes in specific work, location, maintenance level and exceptional cases). Prior to the assignment of maintenance persons for an aircraft maintenance task, the estimated start time and estimated end time of the task are null. The maintenance task database may also record the list of the maintenance persons selected for each maintenance task.

The maintenance personnel database may record such information as a list of all maintenance persons, a list of maintenance persons attending each day, and the information of each maintenance person (e.g. basic information, information for task arrangement, information for available time period, and the average speed V_{S}, etc)In one embodiment, the list of all maintenance persons can be updated periodically, or occasionally or as needed. The list of the maintenance persons attending each day can either be recorded by the management staff into the database of aircraft maintenance persons, or be exported from an attendance system and transferred into the database of aircraft maintenance persons, or stored in the database of aircraft maintenance persons through other methods. The basic information of each maintenance person may include one or more of the following: name, sex, age, health condition, maintenance experience, expertise, and special situation. The information for task arrangement of each maintenance person may include, for example, the estimated start time, the estimated end time and task location related to each aircraft maintenance task assigned to the maintenance person in the predetermined time period (e.g. current day). In one embodiment, the aircraft maintenance personnel database also records the available time period (idle time period) information for each maintenance person. The idle time period stands for the time period where the maintenance person has no assigned aircraft maintenance task, which can be calculated by the task arrangement information of the maintenance person.

Optionally, said maintenance task database and maintenance personnel database can also be stored in the local memory device of the computing device. In such an embodiment, the computer system performing the method of aircraft maintenance may only consist of the computing device without the memory device. The computing device may be in or not in the network environment.

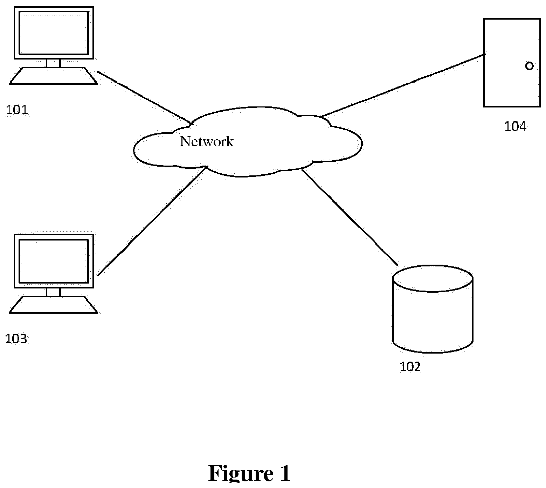

In another embodiment, the method for maintaining an aircraft according to each embodiment in the present application may be carried out in a server. Figure 1 shows such an embodiment: computer system 100 comprises one or more computing devices 101, 103 and a storage device 102, further comprising a server 104 able to be communicably connected to the computing devices 101 and 103 and the storage device 102. The server refers to any remote computing device that may communicably exchange with the client/client side device and comprise a centralized or distributed processor and an optional memory The server 104 may interact with a user (e.g. a management staff) through the computing devices 101 and 103. In response to the user input/instruction from the computing devices 101 and 103, the server 104 implements the method for maintaining an aircraft of the present application by accessing the database in the memory device 102 and sends to the computing devices 101 and 103 the result of the maintenance persons assigned to the aircraft maintenance task. Although Figure 1 and the embodiment only show two computing devices, understandably, there could be one or more than two computing devices.

The computing devices 101 and 103 can be a computer, a laptop, a workstation, an iPhone, an Android mobile phone, a Pad, and other devices able to access network and perform certain data calculations.

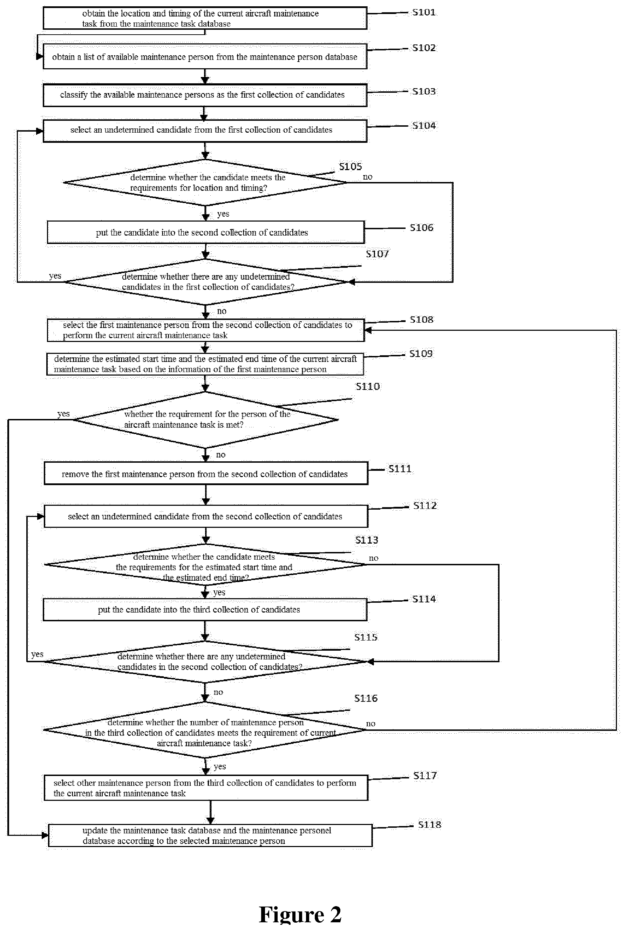

Fig. 2 is a flow diagram showing a method for maintaining an aircraft according to one embodiment in the present application. In the following description, the aircraft maintenance method is made possible in an embodiment where the computing device access the maintenance task database and maintenance personnel database in the memory device/memorizer. In the embodiment shown in Figure 2, the aircraft maintenance method comprises the following steps:
Step S101, obtaining the location and timing of the current aircraft maintenance task from the maintenance task database.

In the management of aircraft maintenance, the system needs to ensure that each aircraft maintenance task has been assigned to the appropriate maintenance person(s) to perform. After the assignment of maintenance persons to the current aircraft maintenance task by the system, according to the aircraft maintenance method in the embodiment, the computing device obtains the location and timing of the current aircraft maintenance task in step S101. The task location for aircraft maintenance can be the current parking spot of the aircraft, such as the number of the parking area or relative/absolute positioning information. The time of aircraft maintenance task may comprise one or more time information related to the aircraft maintenance task, e.g. the task time period information for the performance of the aircraft maintenance task, the evaluated amount of time Ts required by the task, and the redundant amount of time ΔT for aircraft maintenance task. Following the assignment of maintenance persons to the aircraft maintenance task, the maintenance task database may be immediately updated to record the estimated start time and the estimated end time of the aircraft maintenance task. Optionally, after the aircraft maintenance task is completed, the maintenance task database may be updated to record the actual start time and end time of the aircraft maintenance task.

Step S102, obtaining a list of available maintenance persons from the maintenance personnel database. The available maintenance persons can be all maintenance persons attending on that day.

Step S103, classifying the available maintenance persons as the first collection of candidates. In another embodiment, the available maintenance persons are screened on the basis of the maintenance level information of the current aircraft maintenance task obtained from the maintenance task database, and then the available maintenance persons meeting the maintenance level are classified as the first collection of candidates. The maintenance level may be established in view of aviation flight regulations and airline practices, comprising, for instance, transit(TR), pre-flight(PF) and after flight(AF). In other embodiments, the maintenance level may further comprise regular check, A check, C check, troubleshooting, etc. In an embodiment, the maintenance level information is stored in the database accessible by the computing device and necessary to perform the method embodiment in the present application, wherein one maintenance level corresponds to one or more work consisting of inspection, maintenance and repair. For example, transit(TR) may comprise the inspection and supplement of grease and hydraulic oil.

In one embodiment, different maintenance levels need to be performed by the maintenance persons with different experiences. For example, the maintenance for an engine requires the candidates with experience of engine maintenance. To be sure, the low-level maintenance persons can be assigned to handle entry-level maintenance task.

Alternatively, the screening for maintenance level can be performed between the steps S107 and S108.

Step S104, candidate maintenance persons who have not been determined by step S105 are selected from the first collection of candidate.

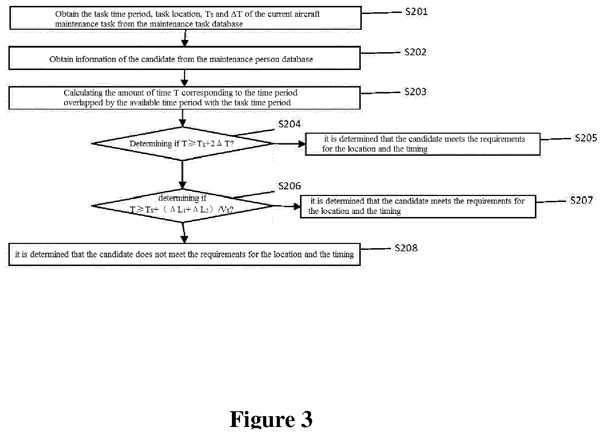

Step S105, determining if the selected candidates meet the requirements for the location and timing of the current aircraft maintenance task. The embodiment for identification will be specified below according to Fig. 3.

As shown in Fig. 3, the process to determine whether the selected candidates meet the requirements for such location and timing includes:

Step S201, obtaining task time period, task location, T_{S} and ΔT from maintenance task database for the current aircraft maintenance task. For instance, suppose the current aircraft maintenance task's task time period lasts between 8:40 a.m. and 9:40 a.m., Ts is 24 minutes (0.4 hour), and ΔT is 12 minutes (0.2 hour).

Step S202, obtaining the information related to the candidates from the maintenance personnel database. Such information may comprise their basic information, information for task arrangement, and the average speed V_{S}. and the like. The information for task arrangement may refer to the estimated start time, the estimated end time and the task location related to each aircraft maintenance task assigned to the maintenance person in the predetermined time period (e.g. current day). Their idling time period can be calculated by the task arrangement information. The distance between two task locations can be calculated depending on the location of each task.

Step S203, calculating the amount of time T corresponding to the time period overlapped by the idling time period of the candidates with the task time period of the current aircraft maintenance task. For example, the obtained task arrangement information shows that the candidates have two idling time periods: idling time period 1 between 9:00 a.m. and 10:00 a.m.; and idling time period 2 between 13:30 p.m. and 17:30 p.m. In this case, the idling time period 1 of the candidates can be used for the current aircraft maintenance task, the overlapping time period with the task time period (8:40 a.m. to 9:40 a.m.) is from 9:00 a.m. to 9:40 a.m., and the amount of time T is 40 minutes (0.67 hour).

Step S204, determining if T≥T_{S}+2ΔT.

If T≥T_{S}+2ΔT is true in step S204, Step S205 follows, determining the candidates meet the requirements for the location and timing of the current aircraft maintenance task. In light of the data in the example above, it can be calculated that T_{S}+2ΔT is 0.8 hour, greater than T (0.67 hour), that is, T≥T_{S}+2ΔT fails.

If T≥T_{S}+2ΔT fails in step S204, step S206 follows, determining whether T≥TS+ (Δ L₁+ΔL₂) /VS is true, wherein ΔL₁ is the distance between the location of said current aircraft maintenance task and the location of the aircraft maintenance task assigned for the candidates prior to said current aircraft maintenance task, ΔL₂ is the distance between the location of said current aircraft maintenance task and the location of the aircraft maintenance task assigned for the candidates following said current aircraft maintenance task. In the case that there is no prior aircraft maintenance task or the task location thereof is unavailable, replace the ΔL₁/V_{S} in T≥T_{S}+ (ΔL₁+ΔL₂) /Vswith ΔT. In the case that there is no following aircraft maintenance task or the task location thereof is unknown, replace the ΔL₂/V_{S} in T≥T_{S}+ (ΔL₁+ΔL₂) /V_{S} with ΔT. For example, suppose ΔL₁, after calculation, is 0.1 km and ΔL₂ is 0.2 km, and the obtained Vₛ is 4.3km/h, it can be calculated that T_{S}+(ΔL₁+ΔL₂)/V_{S} is 0.47 hour based on the data in the example above, less than T (0.67 hour), that is, T≥T_{S}+ (ΔL₁+ΔL₂) /V_{S} is true.

If T≥T_{S}+ (ΔL₁+ΔL₂) /V_{S} is true in step S206, step S207 follows, determining whether the candidates meet the requirements for the location and timing of the current aircraft maintenance task. If not, step S208 follows, determining whether the candidates do not meet the requirements for the location and timing of the current aircraft maintenance task.

In the embodiments shown in Figure 3 and the above, the process for determining whether the selected candidates meet the requirements for location and timing comprises two steps S204 and S206. A person skilled in the art, however, will understand the process can skip steps S206 and S207 in another embodiment, and the process can skip steps S204 and S205 in another embodiment.

The step S206 enables a better determination about whether the candidates meet the requirements for location and timing of the current aircraft maintenance task, improving the time utilization for maintenance persons.

Back to Fig. 2, if the result in step S105 is yes, step S106 follows. The candidates are put into the second collection of candidates and step S107 is performed. If the result is NO, step S107 follows.

Step S107, determining if there are candidates not undergoing step S205 in the first collection of candidates. Put differently, whether there are candidates not undergoing the determination step about whether they meet the requirements for location and timing of the current aircraft maintenance task.

If the answer in step S107 is yes, back to step S104 to proceed with the step of determination if other candidates meet the requirements for location and timing until all the candidates in the first collection of candidates are identified. Then, step S108 follows.

Step 108, selecting the first maintenance person from the second collection of candidates to perform the current aircraft maintenance task. In this process, rank the candidates in the second collection of candidates in order of time priority based on the comparison between the time quantities T_{A} and T_{S} of each candidate's idling time period to be used for the current aircraft maintenance task, wherein a smaller difference between T_{A} and T_{S} means a higher time priority, and rank the distance priority of the candidates in the second collection of candidates based on the combined distances of the location of current aircraft maintenance task, the location of the aircraft maintenance task prior to the current aircraft maintenance task, and the location of the aircraft maintenance task following the current, wherein a shorter combined distance means a higher priority. In addition, for each candidate in said second collection of candidates, calculate the weighted sum of the time priority and the distance priority using predetermined weights as a comprehensive priority of the candidate. In an embodiment, the predetermined weight of time priority is set higher than that of distance priority while calculating the comprehensive priority. According to one embodiment, select the candidates with the highest or higher time priority from the second collection of candidates as the first maintenance person. According to another embodiment, select the candidates with the highest or higher distance priority from the second collection of candidates as the first maintenance person. According to another embodiment, select the candidates with the highest or higher comprehensive priority from the second collection of candidates as the first maintenance person.

Step S109, determining the estimated start time and the estimated end time of the current aircraft maintenance task based on the information of the first maintenance person. Such information may comprise the basic information, information for task arrangement, and the average speed Vs. The information for task arrangement may refer to the estimated start time, the estimated end time and the task location related to each aircraft maintenance task assigned to the maintenance persons in the predetermined time period (e.g. current day). The idling time period of the first maintenance person can be calculated by the obtained task arrangement information. According to an embodiment, compare the start time of the idling time period of the first maintenance person to be used to perform the current aircraft maintenance task plus the time value of ΔL₁/V_{S} with the start time of the task time period of the current aircraft maintenance task, set the later one therebetween as the estimated start time tᵢ of the current aircraft maintenance task, and set the value obtained from calculating tᵢ+T_{S} as the evaluated end time tₑ of the current aircraft maintenance task, wherein ΔL₁ is the distance between the location of said current aircraft maintenance task and the location of the aircraft maintenance task assigned for the candidate prior to said current aircraft maintenance task. Then, step S110 follows.

Step S110, determining whether the requirements for maintenance persons of the current aircraft maintenance task being met following the selection of the first maintenance person. For example, some aircraft maintenance task has predetermined number of persons, and some aircraft maintenance task requires a specific qualification (e.g. aircraft release) for the maintenance persons.

If the requirements for maintenance persons are met after determination, step S118 follows. The maintenance task database and the maintenance personnel database are updated based on the selected maintenance persons. If the requirements for maintenance persons are not met (e.g. the number of the persons)after determination, step S111-S117 follows to proceed with the selection of maintenance persons until the requirements are met.

Step S111, removing the selected first maintenance person from the second collection of candidates.

Step S 112, selecting a candidate undetermined in step S113 from the second collection of candidates.

Step S113, determining whether the selected candidate meets the estimated start time and the estimated end time of the current aircraft maintenance task determined in step S109. According to an embodiment, step S113 can be performed by determining whether the start time tᵢ' and the end time tₑ' of the idling time period of the candidate to be used to perform the current aircraft maintenance task satisfy the determined estimated start time tᵢ and estimated end time tₑ. According to an embodiment, whether the start time tᵢ' and the end time tₑ' of the corresponding idling time period of the candidate meet said estimated start time tᵢ and said estimated end time tₑ is determined based on, determining whether tᵢ' is greater than or equal to the amount of time of ΔT earlier than tᵢ and tₑ' is greater than or equal to the amount of time of ΔT later than tₑ, and, if they are, the candidate is determined to satisfy said estimated start time tᵢ and said estimated end time tₑ. According to another embodiment, whether the start time tᵢ' and the end time tₑ' of the corresponding idling time period of the candidate meet said evaluated start time tᵢ and said evaluated end time tₑ is determined based on, determining whether tᵢ' is greater than or equal to the amount of time of ΔL₁V_{S} (if ΔL₁ is unavailable or unknown, replace ΔL₁/V_{S} with ΔT) earlier than tᵢ and tₑ' is greater than or equal to the amount of time of ΔL₂/V_{S} (if ΔL₂ is unavailable or unknown, replace ΔL₂/V_{S} with ΔT) later than tₑ, wherein ΔL₁ is the distance between the location of said current aircraft maintenance task and the location of the aircraft maintenance task assigned for the candidate prior to said current aircraft maintenance task, ΔL₂ is the distance between the location of said current aircraft maintenance task and the location of the aircraft maintenance task assigned for the candidate following said current aircraft maintenance task, and V_{S} is a set speed, and, if the answer is YES, it is determined that the candidate meet said evaluated start time tᵢ and said evaluated end time tₑ.

If the answer in step S113 is yes, step S114 follows to put the candidate to the third collection of candidates. Otherwise, step S 115 follows.

So far, the process of determining the candidate is over. The procedure goes to step S115, determining if there are candidates not undergoing the determination step S113 in the second collection of candidates. Put differently, whether there are candidates in the second collection of candidates not undergoing the determination step about whether they meet the requirements for estimated start time and estimated end time.

If the answer in step S115 is yes, back to step S112 to proceed with the step of determination of other candidates in the second collection of candidates until all the candidates in the second collection of candidates are identified. Then, step S116 follows, determining if the number of candidates in the third collection of candidates meet the requirements of the current aircraft maintenance task. For example, if the current aircraft maintenance task requires three maintenance persons, the number of candidates in the third collection of candidates should be equal or more than two, otherwise, it shall be determined to fail to meet the requirements.

If the determination of step S116 is meeting the requirements, step S117 follows, selecting other maintenance persons from the third collection of candidates to perform the current aircraft maintenance task together with the first maintenance person. In this process, likewise, rank the candidates in the third collection of candidates in order of time priority based on the comparison result of the time amount T_{A} and T_{S} of each candidate's corresponding idling time period to be used for the current aircraft maintenance task, wherein a smaller difference between T_{A} and T_{S} means a higher time priority, and rank the candidates in the third collection of candidates in order of distance priority based on the combined distances of the location of current aircraft maintenance task, the location of the aircraft maintenance task prior to the current aircraft maintenance task, and the location of the aircraft maintenance task following the current, wherein a shorter combined distance means a higher priority. In addition, for each candidate in the third collection of candidates, calculating the weighted sum of said time priority and said distance priority using predetermined weights as a comprehensive priority of the candidate. In an embodiment, set weighting value of time priority greater than that of distance priority while calculating the comprehensive priority. According to one embodiment, select the candidates with the higher time priority from the third collection of candidates as other maintenance persons. According to another embodiment, select the candidates with the higher distance priority from the third collection of candidates as other maintenance persons. According to another embodiment, select the candidates with the higher comprehensive priority from the third collection of candidates as other maintenance persons.

In addition, according to other embodiments, the other maintenance persons are selected from the third collection of candidates based on predetermined constraint conditions including one or more conditions such as fairness, exception, matching habits, and/or successful patterns. Fairness refers to the workload of task, the night shifts and off days assigned to each maintenance person at a predetermined period (e.g. one day, one week, one month and one year) should be generally the same. Exception means the special case where some maintenance persons cannot perform tasks at a particular time period. Regular grouping stands for the relationship formed among maintenance persons when perform a task according to their collaboration. Requirements for successful practice represent other constraint conditions concluded in view of the past task assignments. Such one or more conditions of fairness, exception, matching habits, and/or successful patterns are preset or obtained from big data analysis.

If the result of step S116 is determined to fail to meet the requirements, back to step S108 to reselect the first maintenance person and repeat steps S109 to S116 until the result of step S116 is determined to meet the requirements.

If the result of step S116 is determined to meet the requirements, step S 117 follows, selecting other maintenance persons from the obtained third collection of candidates to perform the current aircraft maintenance task together with the first maintenance person.

Then the procedure goes to S118. The maintenance task database and the maintenance personnel database are updated based on the selected maintenance persons. For example, update the evaluated start time and evaluated end time of the current aircraft maintenance task and the list of selected maintenance persons in the task database, and update task arrangement information for maintenance persons in the maintenance personnel database. In one embodiment, the updating is conducted on a real-time basis. Alternatively, it can be updated periodically, occasionally or as needed.

In the embodiment shown in Fig. 2 and the descriptions above, steps S101-S118 are described to have a specific sequence. but it is understood that such steps are not fixed, and can be performed in a reversed order or be performed concurrently.

Some aircraft maintenance task requires a specific qualification (e.g. aircraft release) of the assigned maintenance persons. In this case, following the selection of maintenance persons (e.g. the first maintenance person and other maintenance persons) for the aircraft maintenance task, there is a need to identify whether the selected maintenance persons for said current aircraft maintenance task include the maintenance persons qualified to release aircraft. If the determination result shows that there is no maintenance persons qualified to release aircraft, obtain the information of maintenance persons on duty qualified to release aircraft from the maintenance personnel database and classify such maintenance persons as the candidates for aircraft releasing; and select the maintenance persons qualified to release aircraft meeting the requirements for said location and time of said current aircraft maintenance task from said candidates for aircraft releasing to perform said current aircraft maintenance task. Aircraft releasing task differs from routine work involved in the airport. Generally, releasing an aircraft only takes a few minutes, which does not require the presence of the aircraft-releasing person during the entire task, but the presence before the evaluated end time of the aircraft maintenance task. For this reason, the time to release aircraft can be evaluated as a fixed amount of time T_{L}. The aircraft-releasing person only needs to arrive at the task location before the sum of estimated end time tₑ and T_{L}. Therefore, this requirement and the practical task arrangements of candidates for aircraft releasing will lead to appropriate aircraft-releasing person for the aircraft maintenance task.

The above describes a sample process to select maintenance persons for an aircraft maintenance task. In operation, the management staff may continue to manually select other aircraft maintenance tasks as the current aircraft maintenance task and select the maintenance persons for the task until all the aircraft maintenance tasks are assigned with maintenance persons. Alternatively, the computing device may automatically select each aircraft maintenance task and corresponding maintenance persons until all the aircraft maintenance tasks are assigned with maintenance persons.

According to the modification shown in the embodiment of Fig.2, the method to maintain aircraft in the present invention further includes: in the case that the aircraft maintenance task having been assigned to maintenance persons occurs a change that affects the performance of other aircraft maintenance tasks, receiving a change request of aircraft maintenance task and reassigning the affected aircraft maintenance task (including the aircraft maintenance task experiencing the change and other affected aircraft maintenance tasks) to maintenance persons based on the method above. According to one embodiment, the change request of said aircraft maintenance task comprises one or more following changes: addition or subtraction of aircraft maintenance task, maintenance level of aircraft maintenance task, location of aircraft maintenance task, timing of aircraft maintenance task, and maintenance persons.

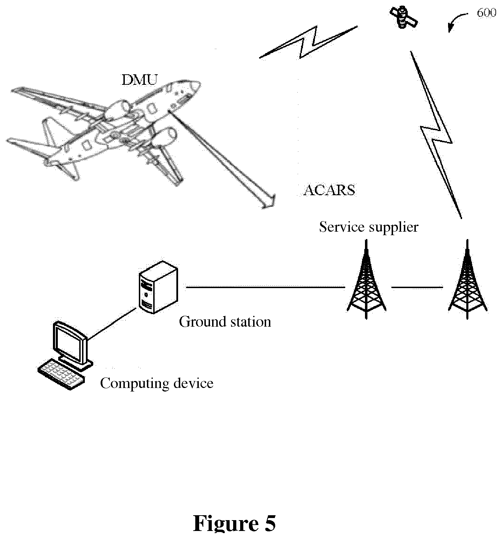

According to an embodiment of the present invention, a computing device (including a remote server) for performing the method for maintaining an aircraft is communicably connected to a data system of aircraft. Figure 5 shows a computing device communicably connected to a data system 600 of aircraft according to an embodiment of the present application.

One feature of such systems is to obtain the data through real-time monitoring. A message containing specific data will be generated automatically when some triggering conditions are met. For example, the method for maintaining an aircraft according to the embodiments of the present application comprises receiving fault message sent by aircraft data system to automatically generate an aircraft maintenance task, and allows an automatic selection of maintenance persons for the generated aircraft maintenance task.

Take ACMS system for example, it has the two important functions as follows:
Collecting, processing and recording the parameters of an aircraft. Such parameters are stored in an internal memory or an external recorder of a data collecting unit, such as Digital AIDS Recorder (DAR) Quick Access Recorder (QAR).

Generating system message. Message will be generated when some aircraft states or system parameters meet the conditions to trigger message. Such messages are stored in the loss-proof memory of the data collecting unit.

When an aircraft is in an abnormal state, e.g. an alarm occurs as a result of abnormal parameter, ACMS system will record such an abnormal situation and generate corresponding fault message on the basis of the situation and send it to the ground station of airlines.

In addition to the ACMS system, the CMC system on the aircraft will send fault information and cockpit warning information generated by the self-examination systems to the ground through message.

One embodiment of fault message transmission is Aircraft Communication Addressing and Reporting System (ACARS). ACARS is a digital data link system that transmits message (short message) through wireless or satellite between aircraft and a ground station and provides service for air-ground and ground-ground mass traffic data communication of airlines, to realize the exchange of various information.

ACARS system sends and receives very-high-frequency wireless digital message from ground. On the ground, it possesses a network provided by a ground station 410 of a wireless transceiver that can receive or send message (data link message). The ground stations, typically owned by individual service providers generally, send the received messages to the servers of different airlines on the network.

On one hand, ACARS enables a flying plane to provide such real-time information as flight dynamics and engine parameters automatically and other information to the ground station of airlines, without intervention of the crew members. On this basis, the operation control center of airlines allow them to have full access to the flight states of their aircrafts through a great deal of real-time and continuous flight data and other information obtained from their own operating systems, making possible a real-time monitoring on the aircrafts and meeting the requirements for navigation, operation, maintenance and management of other sectors. On the other hand, the ground station can provide a variety of services for the aircrafts in flight, including meteorological information, route condition, and troubleshooting for emergency fault in air, thus upgrading the flight safety and service for passengers. As VHF ground-air communication channel is saturated with less information transmitted in low speed, the two-way data communication system can make a difference in communication support between ground and air.

Based on the computing device(including a remote server) to perform the method for maintaining an aircraft in the embodiments of the present application, the ground station of airlines can receive the fault message. The computing device analyzes the fault message by loading its information and then adds one or more aircraft maintenance tasks to the maintenance task database.

According to an embodiment of present invention, after the selection of aircraft maintenance persons for the aircraft maintenance task, maintenance instruction is sent to the terminal device accessible to the selected maintenance persons, including issuing a notice of maintenance task to the terminal device accessible to the selected the first maintenance person and/or the other maintenance persons and requesting a confirmation from the first maintenance person and/or the other maintenance persons.

Alternatively, when the confirmation is not received from the maintenance person within a predetermined time period, said computing device issues a warning, including a sound warning, image warning, a light warning, etc.

As an alternative embodiment for the aircraft maintenance method, in the selection of the first maintenance person and the other maintenance persons, the GPS position of each maintenance person in the second collection of candidates is available, through which the computing device assigns the maintenance task to the maintenance person who is closest to the site of task and issues a maintenance instruction to the terminal device accessible to the selected maintenance person.

As described above, the computing device(including a remote server) to perform the method for maintaining an aircraft in the embodiments of the present application comprises a memory and a processor. Said processor that can access said memory, wherein said memory stores instructions that make said computing device configured to perform the embodiments of aircraft maintenance method of the present invention in the course of implementation by the processor. Said processor can be a centralized or distributed processor. Said memory can be any memory medium suitable to store the instructions executable by a computer.

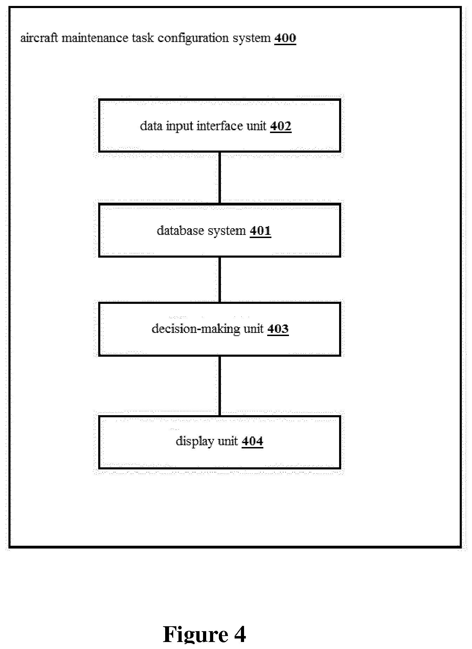

As another embodiment to perform the embodiments of the aircraft maintenance method of the present application, an aircraft maintenance configuration system is provided. Fig. 4 is a schematic diagram showing the composition of the configuration system to perform the embodiments of the aircraft maintenance method according to one embodiment in the present application. As shown in Fig. 4, the aircraft maintenance configuration system 400 comprises:
a database system401 comprising a maintenance task database and a maintenance personnel database;
a data input interface unit 402 connected with said maintenance task database for receiving records of aircraft maintenance task and updating said maintenance task database, and said records comprising the level, location and timing of said aircraft maintenance task;
a decision-making unit 403 able to access said maintenance task database and said maintenance personnel database and configured to
obtain the location and timing for current aircraft maintenance task by accessing the maintenance task database of said database system;
obtain a list of available maintenance persons and classify the available maintenance persons as the first collection of candidates by accessing the maintenance personnel database of said database system;
identify whether each candidate in the first collection of candidates meets the requirements for the location and timing of the current aircraft maintenance task, then classify the candidates meeting such requirements in the first collection of candidates as the second collection of candidates;
select the first maintenance person from said second collection of candidates to perform said current aircraft maintenance task, and determine the evaluated start time tᵢ and the evaluated end time tₑ of said current aircraft maintenance task based on the information of said first maintenance person, and
select one or more maintenance men different from the first maintenance person as other maintenance persons from the ones meeting the evaluated start time and the evaluated end time of said current aircraft maintenance task in the second collection of candidates to perform said current aircraft maintenance task together with said first maintenance person, and
a display unit 404 coupled with said decision-making unit 403 to display the configuration result of the decision-making unit.

Alternatively, the aircraft maintenance configuration system 400 further comprises: a trigger (not indicated in Fig.4), wherein said trigger triggers said decision-making unit 403 to reconfigure the affected maintenance task when the data input interface 402 receives a request to change maintenance task.

According to other embodiments, the decision-making unit 403 may be configured to perform other steps or processes as described in the method embodiments above. No details will be provided here.

As described above, the aircraft maintenance method or the device/system to perform the method according to the embodiments of the present application can be realized in a computer/computing device. The "computer/computing device" herein refers to the electronic instrument able to execute such predefined processes as numerical calculation and/or logical calculation by activating the preset programs or instructions, including a processor or a memory. The processor executes the existing instructions pre-stored in the memory to perform the predefined processes, or hardware like ASIC, FPGA and DSP executes the predefined processes, or the combination of the two to complete the processes. The "terminal device" herein refers to the electronic instrument to conduct a message communication and/or a telephone communication by network and other devices, including but not limited to mobile terminal devices.

Said terminal device or computing device includes but is not limited to personal computer, laptop, desktop computer, tablet, personal digital assistant, server, and mobile phones and the like, wherein the present invention can be realized either by operating said terminal device and/or computing device separated or by the interactive operation between said terminal device and/or computing device after accessing network and other computers in the network, wherein the network of said terminal device/computing device includes but not limited to network, mobile communication network, WAN, MAN, LAN and VPN and the like. The devices in the network include but not limited to a single network server, a network server group consisting of a plurality of network servers, or the cloud consisting of a number of computers or network servers on the basis of cloud computing, wherein the cloud computing, as one distributed computing, is a super virtual computer consisting of a group of loosely-coupled computer set.

It should be noted that said terminal device, computing device, network device and network are only examples. Other present or future possible computing device or network, if applicable, should also be included under the protection scope of the present invention and cited herein as reference.

It should be understood that the method, system and device disclosed in the embodiments of the present application can be achieved by other approaches. The device embodiments described above are only illustrative, for example, the division of modules or units is only made only on the basis of logics. There are other possible divisions in the practical operation, for instance, a plurality of modules or components may be combined or integrated into another system, some features may be ignored or not performed. In addition, The components showed or described may be coupled or directly coupled or connected communicably together through an indirect coupling or communicable connection among some interfaces, devices or modules., which may be electrical, mechanical or in other forms.

In the description, the module or unit "is configured to" means that such modules or units take form of hardware (e.g. a processor and a memorizer) or software or firmware when the process unit of a processor performs software (application) or firmware instruction.

The module or unit as a separate part described above can selectively be physically separate, so do the parts as a module or a unit display. That is, they can either be arranged in one place or in a plurality of network units. The goal of embodiments can be achieved by some of the units or all units according to practical requirements.

In addition, each functional module or unit in the embodiments of the present invention can be integrated all in one processing module or unit, or used as one module or unit. In other cases, two or more modules or units can be integrated into one module or unit. Such integrated modules or units can be achieved by hardware or the functional module or unit of hardware, software, firmware or the combination thereof.

A person skilled in the art can understand the present invention as follows: all or part of steps defined in the method embodiments of the present application can be realized by hardware with programmed-instruction. Such programs can be stored in a storage medium readable by a computer. The steps in the method embodiments above are performed in the implementation of such programs. The storage medium above comprises mobile storage device, read-only memory, random access memory, disk, compact disc and other medium that stores program code.

Alternatively, in case that the integrated units above take form of software functional module and are sold or used as separate products, they can also be stored in a storage medium readable by a computer. On this basis, the contribution of the technical solution in the embodiments over the prior art substantially is a software product in a sense. The computer software product is stored in a storage medium, including some instructions to enable a computer (as a personal computer, server, or network device, etc.) to perform part of or all the method in the embodiments. Said storage medium comprises mobile storage device, read-only memory, random access memory, disk, compact disc and other medium that stores program code.

The descriptions above only represent the specific embodiments of the present invention, but the protection scope is not limited here. Based on the disclosure above, any person skilled in the art is easily aware that a change or substitution about the contents above will also fall into the protection scope of the present invention. Therefore, the protection scope thereof should be subject to the claims.

## Claims

1. A method for maintaining an aircraft, comprising:
accessing a maintenance task database through a computing device to obtain location and timing of current aircraft maintenance task;
accessing a maintenance personnel database through said computing device to obtain a list of available maintenance persons and classify said available maintenance persons as a first collection of candidates;
determining whether each candidate in said first collection of candidates meets requirements for said location and timing of said current aircraft maintenance task through said computing device, and then classifying the candidates meeting said requirements in said first collection of candidates as a second collection of candidates; and
selecting a first maintenance person from said second collection of candidates through said computing device to perform said current aircraft maintenance task, and determining an estimated start time tᵢ and an estimated end time tₑ of said current aircraft maintenance task based on information of the first maintenance person.

2. The method for maintaining an aircraft according to claim 1 further comprising: selecting other maintenance persons from the second collection of candidates through said computing device to perform the current aircraft maintenance task together with the first maintenance person, wherein each of said other maintenance persons meets the requirements for the estimated start time and the estimated end time of the current aircraft maintenance task.

3. The method for maintaining an aircraft according to claim 1 or 2, wherein determining whether each candidate in said first collection of candidates meets the requirements for said location and timing includes
for each candidate in the first collection of candidates,
(a) determining if the candidate satisfies T≥T_{S}+2ΔT; and in response to the candidate satisfies T ≥T_{S}+2ΔT, determining that the candidate meets the requirements of said location and timing, wherein T is an amount of time corresponding to a time period during which an idling time period of the candidate is overlapped with a task time period of the current aircraft maintenance task; T_{S} is a predetermined amount of time required for the current aircraft maintenance task; ΔT is a predetermined redundant time; and the task time period of said current aircraft maintenance task is a time period for performing the current aircraft maintenance task;
or,
(b) determining if the candidate satisfies T≥T_{S}+ (ΔL₁+ΔL₂) /V_{S}; and in response to the candidate satisfies T≥T_{S}+ (ΔL₁+ΔL₂) /V_{S}, determining that the candidate meets the requirements of said location and timing,
wherein T is an amount of time corresponding to a time period during which an idling time period of the candidate is overlapped with a task time period of the current aircraft maintenance task; T_{S} is a predetermined amount of time required for the current aircraft maintenance task; ΔT is a predetermined redundant time; the task time period of said current aircraft maintenance task is a time period for performing the current aircraft maintenance task, ΔL₁ is a distance between a location of said current aircraft maintenance task and a location of an aircraft maintenance task assigned to the candidate prior to said current aircraft maintenance task, ΔL₂ is a distance between the location of said current aircraft maintenance task and a location of an aircraft maintenance task assigned for the candidate following said current aircraft maintenance task, and V_{S} is a set speed.

4. The method for maintaining an aircraft according to claim 3, further comprising:
ranking candidates in the second collection of candidates in order of time priority based on comparison result of the time amount T_{S} and T_{A} which is each candidate's corresponding idling time period, wherein a smaller difference between T_{A} and T_{S} means a higher time priority; and/or,
ranking candidates in the second collection of candidates in order of distance priority based on the combined distances of the location of current aircraft maintenance task, the location of the previous aircraft maintenance task, and the location of the next aircraft maintenance task, wherein a shorter combined distance means a higher priority.

5. The method for maintaining an aircraft according to claim 4, further comprising one of the following operations:
(i) selecting the candidates with the highest or higher time priority from the second collection of candidates as said first maintenance person;
(ii) selecting the candidates with the highest or higher distance priority from the second collection of candidates as said first maintenance person; and
(iii) for each candidate in said second collection of candidates, calculating a weighted sum of said time priority and said distance priority using predetermined weights, as a comprehensive priority; and selecting a candidate with the highest or higher comprehensive priority from the second collection of candidates as the first maintenance person; preferably, the predetermined weight for said time priority is greater than that for said distance priority while calculating said weighted sum.

6. The method for maintaining an aircraft according to claim 2, wherein selecting said other maintenance persons from said second collection of candidates further comprises:
for each candidate in said second collection of candidates, other than the first maintenance person, determining whether a start time tᵢ' and an end time tₑ' of a corresponding idling time period of the candidate satisfy said estimated start time tᵢ and said estimated end time tₑ;
classifying the candidate in the second collection of candidates which meets said estimated start time and said estimated end time, other than the first maintenance person, as a third collection of candidates; and
selecting said other maintenance persons from said third collection of candidates.

7. The method for maintaining an aircraft according to claim 6, wherein determining whether the start time tᵢ' and the end time tₑ' of the corresponding idling time period of the candidate meet said evaluated start time tᵢ and said evaluated end time tₑ includes:
(a) determining whether tᵢ' is earlier than tᵢ by an amount of time which is greater than or equal to ΔT and tₑ' is later than tₑ by the amount of time, and if the answer is YES, determining that the candidate meets said estimated start time tᵢ and said estimated end time tₑ;
or,
(b) determining whether tᵢ' is earlier than tᵢ by an amount of time which is greater than or equal to ΔL₁/V_{S} and tₑ' is later than tₑ by an amount of time which is greater than or equal to ΔL₂/V_{S}, wherein ΔL₁ is a distance between a location of said current aircraft maintenance task and a location of an aircraft maintenance task assigned for the candidate prior to said current aircraft maintenance task, ΔL₂ is a distance between a location of said current aircraft maintenance task and a location of an aircraft maintenance task assigned for the candidate following said current aircraft maintenance task, and V_{S} is a preset speed, and if the answer is YES, determining that the candidate meets said estimated start time tᵢ and said estimated end time tₑ.

8. The method for maintaining an aircraft according to claim 6, wherein selecting said other maintenance persons from said third collection of candidates comprises:
ranking candidates in the third collection of candidates in order of time priority based on comparison results of the amount of time T_{A} of each candidate's corresponding idling time period and the estimated amount of time T_{S} of said current aircraft maintenance task, wherein a smaller difference between T_{A} and T_{S} means a higher time priority, and
selecting candidates with higher time priorities from the third collection of candidates as said other maintenance persons.

9. The method for maintaining an aircraft according to claim 1 or 2, further comprising:
accessing said maintenance task database through said computing device to obtain a maintenance level of said current aircraft maintenance task, and
removing the maintenance person who does not conform with said maintenance level from said first collection of candidates.

10. The method for maintaining an aircraft according to claim 1 or 2, further comprising:
determining whether the selected maintenance persons for said current aircraft maintenance task include a maintenance person qualified to release aircraft;
in response to the determination that a maintenance person qualified to release aircraft is not included , obtaining information of maintenance persons qualified to release aircraft from said database and classifying as candidate aircraft release persons, and
among said candidates release persons, selecting those who meet said location and timing of said current aircraft maintenance task to perform said current aircraft maintenance task.

11. The method for maintaining an aircraft according to claim 1 or 2, further comprising:
receiving a change request of aircraft maintenance tasks; and
re-arranging aircraft maintenance tasks which are affected by the change request;
preferably, the change request of aircraft maintenance tasks comprises one or more of: addition or subtraction of an aircraft maintenance task, change in maintenance level of an aircraft maintenance task, change in location of anaircraft maintenance task, change in timing of an aircraft maintenance task, and change in maintenance persons.

12. The method for maintaining an aircraft according to claim 2 further comprising:
following the selection of said first maintenance person for said current aircraft maintenance task, updating said maintenance task database based on the estimated start time and estimated end time of said current aircraft maintenance task;
and/or,
following the selection of said first maintenance person and said other maintenance persons for said current aircraft maintenance task, updating said maintenance personnel database based on the estimated start time and estimated end time of said current aircraft maintenance task.

13. The method for maintaining an aircraft according to claim 1 or 2 further comprising:
receiving a fault message sent by the aircraft on a real-time basis through ACARS system,
analyzing the fault message and reading aircraft fault information, and
adding records for an aircraft maintenance task to said maintenance task database according to said aircraft fault information.

14. The method for maintaining an aircraft according claim 2, further comprising: sending a maintenance instruction to terminal device accessible to the selected said first maintenance person and/or said other maintenance persons.

15. The method for maintaining an aircraft of claim 14, wherein sending a maintenance instruction to the terminal device accessible to the selected said first maintenance person and/or said other maintenance persons comprises:
issuing a notice of maintenance task to the terminal device accessible to the selected said first maintenance person and/or said other maintenance persons and requesting a confirmation from said first maintenance person and/or said other maintenance persons;
preferably, giving a warning through said computing device if said confirmation is not received within a predetermined time period.

16. A computing device used to implement a method for maintaining an aircraft, comprising:
a memory,
a processor that can access said memory, wherein said memory stores instructions which make, when executed, said computing device be configured to perform said method for maintaining an aircraft according to any of claims 1-15.

17. A configuration system for aircraft maintenance, comprising:
a database system comprising a maintenance task database and a maintenance personnel database;
a data input interface unit connected with said maintenance task database for receiving records of aircraft maintenance tasks and updating said maintenance task database, and said records comprising a level, a location and a timing of each of said aircraft maintenance tasks;
a decision-making unit able to access said maintenance task database and said maintenance personnel database and configured to
obtain a location and a timing for current aircraft maintenance task by accessing the maintenance task database of said database system;
obtain a list of available maintenance persons by accessing the maintenance personnel database of said database system and classify the available maintenance persons as the first collection of candidates;
determine whether each candidate in the first collection of candidates meets requirements for the location and timing of the current aircraft maintenance task, and classify the candidates meeting said requirements in the first collection of candidates into a second collection of candidates;
select the first maintenance person from said second collection of candidates to perform said current aircraft maintenance task, and determine an estimated start time tᵢ and an estimated end time tₑ of said current aircraft maintenance task based on information of said first maintenance person; and
select one or more maintenance persons different from the first maintenance person as other maintenance persons from the ones in the second collection of candidates which meet the estimated start time and the estimated end time of said current aircraft maintenance task to perform said current aircraft maintenance task together with said first maintenance person; and
a display unit coupled with said decision-making unit to display a configuration result by the decision-making unit.

18. The configuration system for aircraft maintenance according to claim 17, further comprising:
a trigger, wherein when said data input interface receives a change request for changing a maintenance task, said trigger triggers said decision-making unit to reconfigure a maintenance task which is affected by the change request.

19. The configuration system for aircraft maintenance according to claim 18, wherein said change request comprises one or more of: change in maintenance level of a maintenance task, location of a maintenance task, and/or timing of a maintenance task.

20. The configuration system for aircraft maintenance according to claim 18,wherein to determine whether each candidate in said first collection of candidates meets requirements for said location and timing of said current aircraft maintenance task includes:
for each candidate in the first collection of candidates,
(a) determining if the candidate satisfies T≥T_{S}+2ΔT; and in response to that it is satisfied, determining that the candidate meets the requirements of said location and timing,
wherein T is an amount of time corresponding to a time period overlapped by an idling time period of the candidate with a task time period of the current aircraft maintenance task, T_{S} is an estimated amount of time required by the current aircraft maintenance task, ΔT is a preset amount of time for redundancy, and said task time period of said current aircraft maintenance task is a time period used for performing the current aircraft maintenance task;
or,
(b) determining if the candidate satisfies T≥T_{S}+ (ΔL₁+ΔL₂) /V_{S}, and in response to that the candidate satisfies T≥T_{S}+ (ΔL₁+ΔL₂) /Vs, determining that the candidate meets the requirements of said location and timing,
wherein T is an amount of time corresponding to a time period overlapped by an idling time period of the candidate with a task time period of the current aircraft maintenance task; T_{S} is an estimated amount of time required by the current aircraft maintenance task; ΔT is a preset amount of time for redundancy; the task time period of said current aircraft maintenance task is a time period used for performing the current aircraft maintenance task, ΔL₁ is a distance between a location of said current aircraft maintenance task and a location of an aircraft maintenance task assigned for the candidate prior to said current aircraft maintenance task, ΔL₂ is a distance between the location of said current aircraft maintenance task and a location of an aircraft maintenance task assigned for the candidate following said current aircraft maintenance task, and V_{S} is a preset speed.

21. The configuration system for aircraft maintenance according to claim 20, wherein said decision-making unit is further configured to:
rank candidates in the second collection of candidates in order of time priority based on comparison result of the time amount T_{S} and T_{A} which is each candidate's corresponding idling time period, wherein a smaller difference between T_{A} and T_{S} means a higher time priority;
and/or
rank candidates in the second collection of candidates in order of distance priority based on the combined distances of the location of current aircraft maintenance task, the location of the previous aircraft maintenance task, and the location of the next aircraft maintenance task, wherein a shorter combined distance means a higher priority.

22. The configuration system for aircraft maintenance according to claim 21, wherein said decision-making unit is further configured to perform one of the following operations:
(i) selecting a candidate with the highest or higher time priority from the second collection of candidates as said first maintenance person;
(ii) selecting a candidate with the highest or higher distance priority from the second collection of candidates as said first maintenance person; and
(iii) for each candidate in said second collection of candidates, calculating a weighted sum of said time priority and said distance priority using predetermined weights, as a comprehensive priority; and selecting a candidate with the highest or higher comprehensive priority from the second collection of candidates as the first maintenance person; preferably, the predetermined weight for said time priority is greater than that for said distance priority while calculating said weighted sum.

23. The configuration system for aircraft maintenance according to claim 18, wherein to select said other maintenance persons from said second collection of candidates further comprising,
for each candidate in said second collection of candidates other than the first maintenance person, determining whether a start time tᵢ' and an end time tₑ' of the corresponding idling time period of the candidate satisfy said estimated start time tᵢ and said estimated end time tₑ;
classifying candidates in the second collection of candidates meeting said estimated start time and said estimated end time, other than the first maintenance person, as a third collection of candidates; and
selecting said other maintenance persons from said third collection of candidates.

24. The configuration system for aircraft maintenance according to claim 23, wherein to determine whether a start time tᵢ' and an end time tₑ' of the corresponding idling time period of the candidate meet said estimated start time tᵢ and said estimated end time tₑ includes:
(a) determining whether tᵢ' is earlier than tᵢ by an amount of time which is greater than or equal to ΔT and whether tₑ' is later than tₑ by the amount of time which is greater than or equal to ΔT, and if the answer is YES, determining that the candidate satisfies said estimated start time tᵢ and said estimated end time tₑ;
or,
(b) determining whether tᵢ' is earlier than tᵢ by an amount of time which is greater than or equal to ΔL₁/V_{S} and tₑ' is later than tₑ by an amount of time which is greater than or equal to ΔL₂/V_{S}, wherein ΔL₁ is a distance between a location of said current aircraft maintenance task and a location of an aircraft maintenance task assigned for the candidate prior to said current aircraft maintenance task, ΔL₂ is a distance between a location of said current aircraft maintenance task and a location of an aircraft maintenance task assigned for the candidate following said current aircraft maintenance task, and V_{S} is a preset speed, and if the answer is YES, determining that the candidate meets said estimated start time tᵢ and said estimated end time tₑ.

25. The configuration system for aircraft maintenance according to claim 23, wherein selecting said other maintenance person from said third collection of candidates comprises:
ranking candidates in the third collection of candidates in order of time priority based on comparison results of the amount of time T_{A} of each candidate's corresponding idling time period and the estimated amount of time T_{S} of said current aircraft maintenance task, wherein a smaller difference between T_{A} and T_{S} means a higher time priority; and
selecting candidates with higher time priorities from the third collection of candidates as said other maintenance persons.
